# EUROPÄISCHE PATENTSCHRIFT

(11) **EP 3 197 737 B1**
(45) Veröffentlichungstag und Bekanntmachung des Hinweises auf die Patenterteilung: **19.09.2018**
(21) Anmeldenummer: 15745396.0
(22) Anmeldetag: 18.07.2015
(51) Int. Cl.: B60W 30/14, B60W 50/14

(54) **VERFAHREN ZUR FAHRERINFORMATION UND KRAFTFAHRZEUG**
METHOD FOR DRIVER INFORMATION AND MOTOR VEHICLE
PROCÉDÉ D'INFORMATION DU CONDUCTEUR ET VÉHICULE À MOTEUR

(30) Priorität: 25.09.2014 DE 102014014241
(43) Veröffentlichungstag der Anmeldung: 02.08.2017
(73) Patentinhaber: Audi AG, 85045 Ingolstadt (DE)
(72) Erfinder: LIMBACHER, Reimund, 85055 Ingolstadt (DE); NÄGLER, Heinrich, 85055 Ingolstadt (DE)
(74) Vertreter: Herbst, Matthias Heinz
(86) Internationale Anmeldenummer: PCT/EP2015/001482
(87) Internationale Veröffentlichungsnummer: WO 2016/045760

(56) Entgegenhaltungen:
- EP-A2- 2 769 866
- DE-A1-102005 055 322
- DE-A1-102010 041 539

## Beschreibung

Die Erfindung betrifft ein Verfahren zur Fahrerinformation in einem Kraftfahrzeug.

Es ist bekannt, in Kraftfahrzeugen Hinweisfunktionen vorzusehen, die prädiktive Streckendaten nutzen, um dem Fahrer Informationen über einen zukünftig voraussichtlich befahrenen Streckenabschnitt zu geben. Insbesondere sind Assistenzsysteme bekannt, die einem Fahrer in Abhängigkeit von prädiktiven Streckendaten Hinweise zur Steigerung einer Verbrauchs-Effizienz geben. Beispielsweise kann ein Symbol in einer Anzeige angezeigt werden, um den Fahrer anzuweisen, den Fuß vom Gas zu nehmen, wenn gemäß den prädiktiven Streckendaten im weiteren Streckenverlauf eine Verlangsamung des Kraftfahrzeugs erforderlich ist. Durch die Nutzung von prädiktiven Streckendaten können entsprechende Hinweise deutlich früher gegeben werden, als ein Fahrer gemäß seiner eigenen Einschätzung vom Gas gehen würde und das Kraftfahrzeug weiterrollen ließe. Mit einem derartigen System können Effizienzgewinne insbesondere dann erreicht werden, wenn Schilder mit Geschwindigkeitsgeboten aufgrund des Streckenverlaufs oder von Hindernissen erst relativ spät erkennbar sind. Eine Effizienzsteigerung kann weiter verbessert werden, wenn neben den Geschwindigkeitsgeboten auch Informationen über einen Streckenverlauf, insbesondere Informationen über Steigungen und Gefälle, ausgewertet werden.

Für viele Fahrer ist eine Verbrauchsoptimierung aber nicht immer entscheidend. Häufig ist ein besonders zeiteffizientes Fahren, bei dem ein Ziel besonders schnell erreicht wird, gewünscht. Für Navigationssysteme ist bereits bekannt, dass neben besonders verbrauchseffizienten Routen auch besonders schnelle beziehungsweise zeitlich kurze Routen zu einem Fahrtziel berechnet werden. Es ist jedoch wünschenswert, neben der Route auch andere Fahrparameter eines Kraftfahrzeugs bezüglich einer hohen Zeiteffizienz zu optimieren.

EP 2 769 866 A2 offenbart ein Fahrerassistenzsystem für die Beschleunigung eines Fahrzeugs mittels eines Fahrpedals mit einer Steuereinrichtung, der eine Ist-Geschwindigkeit zugeführt und der eine Soll-Geschwindigkeit vorgegeben wird und die aufgrund von Fahrparametern und/oder Fahrzeugparametern eine optimierte, effiziente Beschleunigung ermittelt und vorgibt.

Aus DE 10 2010 041 539 A1 ist ferner ein Fahrerassistenzsystem zur Unterstützung des Fahrers zum verbrauchskontrollierten Fahren mit einem elektronischen Steuersystem und mit Rückmeldefunktionen bekannt. Dabei ist ein Vorausschauassistent bestehend aus einer Anzeige als optische Rückmeldefunktion und einem Steuersystem, welches abhängig von Streckendaten auf einer vorgegebenen Route kombiniert mit aktuellen Fahrzeugdaten Geschwindigkeiten und Entfernungen derart auswertet, dass der Zeitpunkt oder der Streckenpunkt bestimmbar ist, ab wann im Schubbetrieb und/oder im Segelbetrieb eine vorgegebene Geschwindigkeit in einer bestimmten Entfernung erreichbar ist. Das Steuersystem gibt bei Erreichen dieses Zeitpunkts oder Streckenpunkts über die Anzeige eine Fahrempfehlung zum Loslassen des Fahrpedals aus.

Der Erfindung liegt somit die Aufgabe zugrunde, ein Verfahren zur Fahrerinformation anzugeben, das die Zeiteffizienz eines Fahrbetriebs eines Kraftfahrzeugs steigern kann.

Die Aufgabe wird erfindungsgemäß durch ein Verfahren mit den Merkmalen des Patentanspruchs 1 gelöst.

Erfindungsgemäß wird vorgeschlagen, Informationen über einen voraussichtlich zukünftig durch das Kraftfahrzeug befahrenen, prognostizierten Streckenabschnitt, also prädiktive Streckendaten, auszuwerten und dem Fahrer in Abhängigkeit dieser Daten Hinweise zu geben, um eine Zeiteffizienz des Fahrbetriebs zu steigern. Hierzu wird ein in zumindest einem Teilabschnitt des prognostizierten Streckenabschnitts vorgegebenes Geschwindigkeitsgebot ausgewertet und in Abhängigkeit dieses Geschwindigkeitsgebots wird eine Referenzgeschwindigkeit bestimmt. Insbesondere kann ein Geschwindigkeitsgebot im unmittelbar voraus liegenden Streckenabschnitt berücksichtigt werden. Es können jedoch auch Änderungen einer vorgegebenen Maximalgeschwindigkeit berücksichtigt werden, so dass die Referenzgeschwindigkeit in Bereichen, in denen ein Bremsen erforderlich und/oder ein Beschleunigen möglich ist, frühzeitig anpassbar ist. Um den Fahrer anzuleiten, möglichst zeiteffizient zu fahren, wird ihm ein Hinweis gegeben, wenn die Ist-Fahrgeschwindigkeit zumindest um einen vorgegebenen Betrag kleiner ist als die Referenzgeschwindigkeit. Dieser kann dem Fahrer anzeigen, dass eine weitere Beschleunigung möglich ist. Der Fahrer kann somit angeleitet werden, möglichst schnell und dennoch legal und sicher zu fahren.

Die Ermittlung der Referenzgeschwindigkeit kann insbesondere fahrerseitig anpassbar sein. So können beispielsweise absolute oder relative Erhöhungen der Referenzgeschwindigkeit oder der bei der bei der Berechnung der Referenzgeschwindigkeit berücksichtigten Maximalgeschwindigkeit durch einen Fahrer vorgebbar sein

Zur Bestimmung des prognostizierten Streckenabschnitts kann ein Navigationssystem des Kraftfahrzeugs verwendet werden. Als prognostizierter Streckenabschnitt kann insbesondere ein Abschnitt einer geplanten Route verwendet werden. Viele Navigationssysteme sind ausgebildet, eine zukünftige Fahrtroute eines Kraftfahrzeugs zu prognostizieren, wenn kein Ziel programmiert ist oder wenn das Kraftfahrzeug offensichtlich von einer geplanten Route abweicht. In diesem Fall kann als prognostizierter Streckenabschnitt ein Abschnitt der prognostizierten Route verwendet werden.

Insbesondere kann die Referenzgeschwindigkeit in Abhängigkeit eines geometrischen Verlaufs des prognostizierten Streckenabschnitts und/oder einer wenigstens eine fahrdynamikrelevante Eigenschaft einer Fahrbahn im prognostizierten Streckenabschnitt beschreibenden Fahrbahneigenschaft ermittelt werden. Der geometrischen Verlaufs des prognostizierten Streckenabschnitts und/oder die fahrdynamikrelevante Eigenschaft einer Fahrbahn können den Kartendaten des Navigationssystems entnommen werden. Insbesondere können Kurvenradien, Steigungen und Gefälle sowie eine Art der momentan oder zukünftig befahren Straße, also beispielsweise, ob es sich um eine Autobahn, eine Landstraße oder eine Ortsdurchfahrt handelt, berücksichtigt werden. Eine Berücksichtigung dieser Informationen ermöglicht bei der Bestimmung der Referenzgeschwindigkeit physikalische und/oder fahrerspezifische Grenzen des Fahrbetriebs zu berücksichtigen. Beispielsweise kann einem Fahrer bei einem Durchfahren einer Kurve ein Hinweis gegeben werden, wann ein Beschleunigen im Rahmen eines sicheren Fahrbetriebs physikalisch bzw. unter Berücksichtigung der Anforderungen eines Fahrers an den Fahrkomfort und/oder seiner Fähigkeiten wieder zweckmäßig ist.

Erfindungsgemäß wird ferner wenigstens eine Referenzposition ermittelt wird, an der sich die vorgegebene Maximalgeschwindigkeit in dem prognostizierten Streckenabschnitt und/oder in einem zeitlich vorangehend durch das Kraftfahrzeug befahrenen Streckenabschnitt ändert, wobei die Referenzgeschwindigkeit zusätzlich in Abhängigkeit einer auf einen Streckenverlauf des prognostizierten und/oder des vorangehend befahrenen Streckenabschnitts bezogenen, räumlichen und/oder zeitlichen Entfernung des Kraftfahrzeugs von der Referenzposition ermittelt wird. Als räumliche Entfernung wird insbesondere die Länge des prognostizierten Streckenabschnitts zwischen einer momentanen Ist-Position des Kraftfahrzeugs und der Referenzposition ermittelt. Eine Streckenlänge kann aus Kartendaten, insbesondere aus Kartendaten eines Navigationssystems, ermittelt werden. Alternativ oder ergänzend kann eine zeitliche Entfernung berechnet werden, indem beispielsweise die momentane Ist-Geschwindigkeit des Kraftfahrzeugs berücksichtigt wird.

Insbesondere kann als die Referenzposition eine Referenzposition im prognostizierten Streckenabschnitt bestimmt werden, an der sich die vorgegebene Maximalgeschwindigkeit erhöht. Somit kann insbesondere erreicht werden, dass dem Fahrer Hinweise gegeben werden, mit denen er so früh und so schnell wie erlaubt beschleunigen kann, wenn sich eine vorgegebene Maximalgeschwindigkeit auf eine höhere Maximalgeschwindigkeit erhöht. In Abhängigkeit der konkreten Verkehrsregeln eines Landes kann es beispielsweise erlaubt sein, bereits vor dem Passieren eines ein Geschwindigkeitsgebot angebenden Verkehrsschildes, beispielsweise 50 m vor diesem Schild, die Geschwindigkeit des Kraftfahrzeugs moderat zu erhöhen. Bei einer entsprechenden Parametrisierung des erfindungsgemäßen Verfahrens können dem Fahrer Hinweise gegeben werden, um sowohl so zeiteffizient und schnell wie möglich als auch legal und sicher zu fahren.

Alternativ oder ergänzend kann als eine Referenzposition im vorangehend durch das Kraftfahrzeug befahrenen Streckenabschnitt eine Referenzposition bestimmt werden, an der sich die vorgegebene Maximalgeschwindigkeit reduziert. In Abhängigkeit der konkreten Verkehrsregeln eines Landes kann es beispielsweise erlaubt sein, einen bestimmten Bereich hinter einem ein Geschwindigkeitsgebot angebenden Verkehrsschild, beispielsweise 50 m hinter diesem Schild, mit zu nutzen, um auf die neue Maximalgeschwindigkeit zu verlangsamen. Eine Auswertung des Abstandes zur Referenzposition erlaubt in diesem Fall eine kontinuierliche Anpassung der Referenzgeschwindigkeit in Abhängigkeit des Abstandes.

Zur Ermittlung der Referenzposition können Kartendaten verwendet werden, die Geschwindigkeitsgebote für mehrere Streckenabschnitte beschreiben. Insbesondere können Kartendaten eines Navigationssystems genutzt werden. Alternativ oder ergänzend ist es möglich, Markierungen für Geschwindigkeitsgebote, insbesondere Schilder, durch Sensoren des Kraftfahrzeugs zu erfassen und durch eine Bilderkennung eine durch das jeweilige Geschwindigkeitsgebot vorgegebene Maximalgeschwindigkeit zu ermitteln. Als Referenzposition kann in diesem Fall die Position der erkannten Markierung, das heißt z. B. des Schilds, ermittelt werden. Zur Positionserfassung von durch Sensoren eines Kraftfahrzeugs erkannten Objekten ist eine Vielzahl von Verfahren bekannt. Rein beispielhaft seien eine Triangulation durch Bilder mehrerer Kameras, Time-of-Flight basierte Verfahren und die Nutzung eines Laserscanners genannt. Im erfindungsgemäßen Verfahren können beliebige Verfahren zur Sensorauswertung zur Bestimmung von Positionen von Objekten und zur Erkennung von Objekten genutzt werden, um geschwindigkeitsgebotangebende Markierungen und ihre jeweilige Position zu ermitteln.

Eine Erkennung von Geschwindigkeitsgeboten aus Sensordaten ermöglicht einerseits eine Validierung von durch Kartendaten vorgegebenen Geschwindigkeitsgeboten. Andererseits können durch Sensoren des Kraftfahrzeugs vorübergehende Änderungen von Geschwindigkeitsgeboten, die nicht notwendigerweise in Kartendaten erfasst sind, erkannt werden. Bei einer Erkennung von Markierungen für Geschwindigkeitsgebote aus Sensordaten ist es zudem möglich, das erfindungsgemäße Verfahren auch ohne eine Nutzung von Kartendaten beziehungsweise eines Navigationssystems durchzuführen. In vielen Fahrsituationen ist es bereits möglich, einen zukünftig befahrene Streckenabschnitt, beispielsweise einen voraus liegenden Abschnitt einer Schnellstraße, allein aus Sensordaten des Kraftfahrzeugs zu bestimmen.

Um Informationen über den prognostizierten Streckenabschnitt, insbesondere über jeweilige Geschwindigkeitsgebote beziehungsweise die zugeordneten Referenzpositionen zu erhalten, können ergänzend oder alternativ auch Kommunikationsinformationen genutzt werden, die durch eine Infrastruktureinrichtung, ein weiteres Kraftfahrzeug oder einen Rundfunksender bereitgestellt werden.

In Abhängigkeit der momentanen Ist-Fahrgeschwindigkeit und der Referenzgeschwindigkeit kann eine Sollbeschleunigung berechnet werden, wobei der Sollbeschleunigungshinweis die Sollbeschleunigung beschreibt. Es ist möglich, dass der Sollbeschleunigungshinweis nur dann gegeben wird, wenn die Sollbeschleunigung einen vorgegebenen Grenzwert überschreitet. Ergänzend wäre es möglich, die Gabe des Sollbeschleunigungshinweises nur dann durchzuführen, wenn die räumliche und/oder zeitliche Entfernung zwischen Kraftfahrzeug und Referenzposition einen vorgegebenen Grenzwert unterschreitet. Der Zeitpunkt der Ausgabe, also der Grenzwert für die räumliche und/oder zeitliche Entfernung, kann insbesondere durch einen Fahrer einstellbar sein.

Ein Hinweis kann optisch, akustisch und/oder haptisch ausgegeben werden. Eine optische Darstellung einer Sollbeschleunigung kann beispielsweise durch einen Kammschen Kreis, in dem insbesondere die momentane Längs- und Querbeschleunigung sowie die Sollbeschleunigung dargestellt sind, erfolgen. Alternativ oder ergänzend kann eine Sollfahrpedalstellung dargestellt werden, die einer Sollbeschleunigung entspricht, und/oder es kann ein Soll- und ein Istwert für die Beschleunigung dargestellt werden. Eine optische Darstellung kann an einem Kombiinstrument, einem grafischen Display beispielsweise eines Multimediasystems, einem Head-up-Display oder durch eine Datenbrille erfolgen.

Ergänzend zur Hinweisgabe bezüglich einer Sollbeschleunigung kann eine Maximalgeschwindigkeit, die ab der Referenzposition gilt und/oder die Referenzgeschwindigkeit, angezeigt werden. Ergänzend können einem Fahrer zur Visualisierung des Verfahrenserfolgs auch die durch Nutzung des erfindungsgemäßen Verfahrens gewonnene Zeit und/oder Fahrzeiten für eine gleiche Strecke oder einen gleichen Streckenabschnitt aus vorangehenden Fahrten angezeigt werden.

Unter einem Geschwindigkeitsgebot, das eine höhere Maximalgeschwindigkeit vorgibt, wird im erfindungsgemäßen Verfahren auch ein Geschwindigkeitsgebot verstanden, das beliebig schnelle Geschwindigkeiten erlaubt, das heißt eine Geschwindigkeitsbegrenzung aufhebt. Unter einer Sollbeschleunigung ist zudem eine Beschleunigung zu verstehen, die die Geschwindigkeit des Kraftfahrzeugs erhöht.

Die Schritte der Ermittlung der Sollbeschleunigung und der Gabe des Hinweises können mehrfach derart wiederholt werden, dass das Kraftfahrzeug bei einem Befolgen der Hinweise durch den Fahrer auf eine von der vorgegebenen Maximalgeschwindigkeit an der Referenzposition abhängige Soll-Fahrgeschwindigkeit beschleunigt wird.

Die Sollbeschleunigung kann derart ermittelt werden, dass eine Fahrgeschwindigkeit an wenigstens einer vorgegebenen Position in dem prognostizierten Streckenabschnitt unter Berücksichtigung wenigstens einer einen Fahrbetrieb des Kraftfahrzeugs und/oder einen Kraftfahrzeugzustand betreffenden Randbedingung maximal ist. Insbesondere kann als Randbedingung berücksichtigt werden, dass das Kraftfahrzeug nicht auf eine Geschwindigkeit beschleunigt wird, die größer ist als die höhere Maximalgeschwindigkeit, die ab der Referenzposition gilt. Alternativ oder ergänzend können für verschiedene Positionen in dem prognostizierten Streckenabschnitt als Randbedingung jeweils verschiedene Maximalgeschwindigkeiten vorgegeben werden, wobei die Sollbeschleunigung derart ermittelt wird, dass die Fahrgeschwindigkeit an der entsprechenden Position die entsprechende Maximalgeschwindigkeit nicht überschreitet. Die vorgegebene Position, für die eine Fahrgeschwindigkeit maximiert wird, kann insbesondere die Referenzposition oder eine entlang des prognostizierten Streckenabschnitts hinter der Referenzposition liegende vorgegebene Position sein.

Alternativ ist es möglich, dass die Sollbeschleunigung derart ermittelt wird, dass ein Abstand eines Punktes, an dem die höhere Maximalgeschwindigkeit bei einer Beschleunigung mit der Sollbeschleunigung erreicht wird, von der Referenzposition unter Berücksichtigung wenigstens einer einen Fahrbetrieb des Kraftfahrzeugs und/oder einen Kraftfahrzeugzustand betreffenden Randbedingung minimal ist. Die wenigstens eine Randbedingung entspricht der oben erläuterten Randbedingung. Es kann somit erreicht werden, dass die höhere Maximalgeschwindigkeit möglichst früh nach dem Passieren der Referenzposition erreicht wird.

Alternativ kann die Sollbeschleunigung derart ermittelt werden, dass eine prognostizierte Fahrzeit zu einem vorgegebenen Fahrziel unter wenigstens einer vorgegebenen einen Fahrbetrieb des Kraftfahrzeugs und/oder einen Kraftfahrzeugzustand betreffenden Randbedingung minimal ist. Die wenigstens eine Randbedingung entspricht wiederum der vorangehend beschriebenen Randbedingung. Das Fahrziel kann insbesondere ein durch einen Fahrer eingegebenes Fahrziel sein. Es ist jedoch auch möglich, dass ein Fahrziel automatisch, beispielsweise durch eine automatische Routenführung eines Navigationssystems, ermittelt wird.

Als die Randbedingung oder eine der Randbedingungen kann insbesondere ein Füllstand eines Treibstofftanks und/oder ein Ladezustand eines Energiespeichers berücksichtigt werden. Die Zeiteffizienz eines Fahrbetriebs kann gesteigert werden, wenn Tank- beziehungsweise Ladeintervalle bei der Fahrt zu einem Fahrziel vermieden werden. Im Rahmen der Ermittlung der Sollbeschleunigung kann bestimmt werden, ob bei einer Nutzung von bestimmten Sollbeschleunigungen zusätzliche Tank- oder Ladeintervalle notwendig werden. Insbesondere können für die Fahrt zu dem Ziel verschiedene Szenarien berechnet werden, die unterschiedliche Sollbeschleunigungen beschreiben, wobei bei der Berechnung der Fahrtzeit zu einem vorgegebenen Fahrziel Stopps des Kraftfahrzeugs zum Tanken beziehungsweise zum Laden berücksichtigt werden. Beispielsweise kann bei einem vollen Tank beziehungsweise bei voller Batterie eine hohe Sollbeschleunigung vorgegeben werden. Wird das Ziel gemäß einer Vorausberechnung mit geringer Tankfüllung beziehungsweise Batterieladung erreicht, kann hingegen eine Treibstoffeffizienz maximiert werden, um zusätzliche Stopps zu vermeiden. Alternativ oder Ergänzend ist es möglich, die Referenzgeschwindigkeit in Abhängigkeit des Füllstands bzw. des Ladezustands zu bestimmen.

Insbesondere in Hybridfahrzeugen können auch Energiespeicher vorgesehen sein, die eine kurzfristige Erhöhung der Fahrleistung ermöglichen. In Abhängigkeit des Füllzustands des Energiespeichers können höhere Beschleunigungen für bestimmte Zeitintervalle erreicht werden. Es ist daher vorteilhaft, auch den Ladezustand dieser Energiespeicher als Randbedingung und/oder bei der Bestimmung der Referenzgeschwindigkeit zu berücksichtigen.

Im erfindungsgemäßen Verfahren sollen möglichst intuitiv verstehbare Hinweise bezüglich der Sollbeschleunigung an den Fahrer des Kraftfahrzeugs gegeben werden. Es ist daher möglich, dass aus der Sollbeschleunigung eine Sollfahrpedalstellung ermittelt wird, wonach als Hinweis eine die Sollfahrpedalstellung betreffende Information ausgegeben wird. Wird ein Hinweis bezüglich der Sollfahrpedalstellung ausgegeben, muss der Fahrer zum Befolgen des Hinweises ausschließlich das Fahrpedal in die vorgegebenen Sollfahrpedalstellung verbringen. Somit ist der Hinweis besonders intuitiv erfassbar.

Ein Hinweis bezüglich einer Sollfahrpedalstellung kann insbesondere als haptischer Hinweis ausgegeben werden. So kann ein Fahrpedal mit einer vorgebbaren Position seines Druckpunkts genutzt werden, wobei als Hinweis die Sollfahrpedalstellung als Position des Druckpunkts vorgegeben wird. Es ist insbesondere möglich, dass eine entsprechende Verlagerung des Druckpunktes des Fahrpedals durch ein Bedienelement oder ein Menüsystem des Kraftfahrzeugs separat von der Hinweisgabe aktivierbar beziehungsweise deaktivierbar ist.

In Abhängigkeit der konkreten Fahraufgabe und des Fahrertyps kann situationsabhängig ein besonders verbrauchseffizientes oder ein besonders zeiteffizientes Fahren gewünscht sein. In vielen Situationen kann auch eine Mischung aus einem zeit- und eine verbrauchseffizienten Fahren gewünscht sein. Es ist daher möglich, dass eine Bedieneingabe zur Anpassung der Art der Bestimmung der Sollbeschleunigung erfasst wird, wonach angepasst wird, inwieweit ein Energieverbrauch des Kraftfahrzeugs während der Ermittlung der Sollbeschleunigung berücksichtigt wird. Alternativ oder ergänzend kann durch die Bedieneingabe und/oder eine weitere Bedieneingabe auch eingestellt werden, inwieweit ein Energieverbrauch bei der Bestimmung der Referenzgeschwindigkeit berücksichtigt wird. Dies kann in beiden Fällen beispielsweise durch unterschiedliche Gewichtung der berücksichtigten Parameter erfolgen. Insbesondere kann durch ein Bedienelement kontinuierlich oder stufenweise in zwei oder mehr Stufen zwischen einem besonders zeiteffizienten und einem besonders verbrauchseffizienten Fahren gewählt werden.

Um die Zeiteffizienz des Fahrbetriebs weiter zu erhöhen und ein verbessertes Beschleunigungserlebnis zu ermöglichen, können zusätzlich zur Hinweisgabe weitere Fahrzeugsysteme angesteuert werden, beziehungsweise weitere Hinweise an den Fahrer gegeben werden. So kann ein von der Referenzgeschwindigkeit und der momentanen Ist-Fahrgeschwindigkeit des Kraftfahrzeugs abhängender einzulegender Gang eines Getriebes des Kraftfahrzeugs bestimmt werden, wonach ein den einzulegenden Gang betreffender Sollganghinweis an den Fahrer ausgegeben wird oder ein automatisches Getriebe zum Einlegen des einzulegenden Gangs angesteuert wird. Durch eine Anpassung des genutzten Gangs kann ein optimaler Drehzahlbereich für die Beschleunigung vorgegeben werden. Insbesondere kann dem Fahrer ein Hinweis zum Herunterschalten gegeben werden beziehungsweise das Getriebe kann zum Herunterschalten angesteuert werden. Beispielsweise kann auf einer Anzeigeeinrichtung des Kraftfahrzeugs ein Schaltblitz dargestellt werden, der den Fahrer anregt einen oder mehrere Gänge herunterzuschalten.

Ergänzend oder alternativ kann ein Ladedruck eines Turbo-Laders, insbesondere eines elektrisch betriebenen Turbo-Laders, in Abhängigkeit der Referenzgeschwindigkeit und der momentanen Ist-Fahrgeschwindigkeit des Kraftfahrzeugs angepasst werden. Auch weitere Fahrzeugparameter, beispielsweise Getriebesollmomente und/oder Fahrwerksparameter, können in Abhängigkeit der genannten Größen angepasst werden.

Es ist möglich, dass bei Erfassung eines vor dem Kraftfahrzeug fahrenden weiteren Fahrzeugs in Abhängigkeit einer Belegung weiterer Spuren einer befahrenen Straße und/oder eines geometrischen Verlaufs des prognostizierten Streckenabschnitts ein ein Überholen des weiteren Fahrzeugs betreffender Überholhinweis ausgegeben wird. Die Erfassung des vorausfahrenden weiteren Fahrzeugs ist durch Umfeldsensoren des Kraftfahrzeugs möglich. Die Gabe des Überholhinweises kann zusätzlich beispielsweise von der Ist-Fahrgeschwindigkeit und/oder der Referenzgeschwindigkeit und/oder der Sollbeschleunigung abhängen.

Neben dem Verfahren betrifft die Erfindung auch ein Kraftfahrzeug, das zur Durchführung des erfindungsgemäßen Verfahrens ausgebildet ist.

Weitere Vorteile und Einzelheiten der Erfindung zeigen die folgenden Ausführungsbeispiele sowie die zugehörigen Zeichnungen. Dabei zeigen schematisch:
- Fig. 1: ein Ablaufdiagramm eines Ausführungsbeispiels des erfindungsgemäßen Verfahrens,
- Fig. 2 und 3: Ablaufdiagramme für verschiedene Ausgestaltungen des Schritts der Ermittlung der Sollbeschleunigung im Verfahren gemäß Fig. 1, und
- Fig. 4: ein erfindungsgemäßes Kraftfahrzeug.

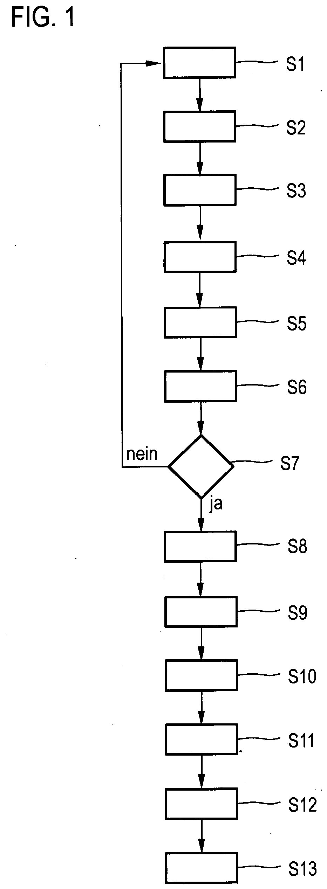

Fig. 1 zeigt schematisch ein Ablaufdiagramm eines Verfahrens zur Fahrerinformation in einem Kraftfahrzeug, in dem einem Fahrer Hinweise für eine zeiteffiziente Fahrweise gegeben werden. In Schritt S1 wird zunächst durch eine Positionsbestimmungseinrichtung des Kraftfahrzeugs, beispielsweise durch ein Satellitennavigationssystem, eine Ist-Fahrzeugposition ermittelt.

In Schritt S2 wird anschließend ein voraussichtlich zukünftig durch das Kraftfahrzeug befahrener, prognostizierter Streckenabschnitt bestimmt. Die Bestimmung des prognostizierten Streckenabschnitts erfolgt durch ein Navigationssystem des Kraftfahrzeugs. Durch das Navigationssystem wird eine Route zu einem durch einen Fahrer eingegebenen Ziel berechnet, und solange das Kraftfahrzeug sich auf der vorausberechneten Route bewegt, wird der vorausliegende Abschnitt dieser Route als der prognostizierte Streckenabschnitt ermittelt. Alternativ ist es möglich, das Navigationssystem zu nutzen, um einen zukünftig durch das Kraftfahrzeug befahrenen Streckenabschnitt zu prognostizieren, wenn keine Zielvorgabe durch den Fahrer erfolgte beziehungsweise wenn die tatsächliche Fahrtroute von der geplanten Route abweicht. Im Stand der Technik sind diverse Verfahren hierfür bekannt. Diese sollen nicht detailliert erläutert werden.

Anschließend werden in Schritt S3 durch ein Geschwindigkeitsgebot oder mehrere Geschwindigkeitsgebote im prognostizierten Streckenabschnitt vorgegebene Maximalgeschwindigkeiten ausgewertet. Die Geschwindigkeitsgebote für eine Vielzahl von Streckenabschnitten sind in Kartendaten des Navigationssystems gespeichert. Entsprechend können Geschwindigkeitsgebote aus der Karte des Navigationssystems extrahiert werden. In einem alternativen Ausführungsbeispiel des Verfahrens könnten ergänzend oder alternativ auch Sensorinformationen von Umfeldsensoren des Kraftfahrzeugs ausgewertet werden, um in einem Sensorerfassungsbereich liegende Markierungen, insbesondere Schilder, zu erfassen und durch diese Markierungen vorgegebene Geschwindigkeitsgebote zu erkennen.

In Schritt S4 wird eine Referenzposition bestimmt, an der sich die durch das Geschwindigkeitsgebot vorgegebene Maximalgeschwindigkeit auf eine höhere Maximalgeschwindigkeit erhöht. Da in Schritten S3 bereits Kartendaten genutzt wurden, um das Vorliegen einer Erhöhung der Maximalgeschwindigkeit zu ermitteln, kann in Schritt S4 eine Referenzposition aus den Kartendaten ausgelesen werden. In dem erwähnten alternativen Ausführungsbeispiel, in dem Geschwindigkeitsgebote durch Kraftfahrzeugsensoren ermittelt werden, ist in diesem Schritt eine sensorbasierte Positionsbestimmung notwendig. Im Stand der Technik sind zahlreiche Verfahren zur sensorbasierten Positionsbestimmung, beispielsweise die Nutzung von Time-of-Flight-Kameras, von Laserscannern oder von einer Triangulation durch mehrere Kamerabilder, bekannt, die zur Ermittlung der Referenzposition einzeln oder kombiniert nutzbar sind.

In Schritt S5 wird eine räumliche Entfernung des Kraftfahrzeugs zu der Referenzposition entlang des prognostizierten Streckenabschnitts berechnet. Ergänzend oder alternativ kann eine zeitliche Entfernung berechnet werden, indem die räumliche Entfernung durch eine momentane oder eine prognostizierte Geschwindigkeit des Kraftfahrzeugs geteilt wird. Die Ermittlung einer räumlichen und/oder zeitlichen Entfernung dient einerseits dazu zu bestimmen, ob bereits ein Hinweis an den Fahrer ausgegeben werden soll, und andererseits zur Ermittlung einer Referenzgeschwindigkeit für das Kraftfahrzeug.

In Schritt S6 wir eine Referenzgeschwindigkeit für das Kraftfahrzeug ermittelt. Die Referenzgeschwindigkeit ist eine in der momentanen Fahrsituation maximal legal, sicher und insbesondere komfortabel fahrbare Geschwindigkeit für das Kraftfahrzeug. In Abhängigkeit von Eigenschaften der befahrenen Strecke im prognostizierten Streckenverlauf, insbesondere von Kurvenradien, wird eine erste Geschwindigkeit berechnet, die voraussichtlich im unmittelbar folgenden Abschnitt des befahrenden Streckenverlaufs sicher und insbesondere unter Berücksichtigung von Fahrereigenschaften komfortabel fahrbar ist. Dabei werden insbesondere auftretende Beschleunigungen ausgewertet. In Abhängigkeit eines momentan gültigen Geschwindigkeitsgebots, eines an der Referenzposition geänderten Geschwindigkeitsgebots und der Entfernung zu der Referenzposition wird zudem eine maximale legale zweite Geschwindigkeit berechnet. Bei der Berechnung der zweiten Geschwindigkeit kann ein fahrerseitig vorgegebener absoluter oder relativer Offset berücksichtigt werden. In einer Weiterbildung des Verfahrens könnten zur Berechnung der zweiten Geschwindigkeit auch Senkungen der Maximalgeschwindigkeit durch ein Geschwindigkeitsgebot im unmittelbar vorangehend durchfahrenen Streckenabschnitt berücksichtigt werden. Die kleinere der ersten und zweiten Geschwindigkeit wird als Referenzgeschwindigkeit bestimmt.

In Schritt S7 wird überprüft, ob ein Differenzwert zwischen der in Schritt S6 ermittelten Referenzgeschwindigkeit und der momentanen Ist-Geschwindigkeit größer als ein insbesondere fahrerseitig vorgegebener Grenzwert ist, also ob die Referenzgeschwindigkeit anzeigt, dass die Geschwindigkeit des Kraftfahrzeugs erhöht werden kann. Ist beispielsweise die momentane Ist-Fahrgeschwindigkeit relativ hoch oder die räumliche beziehungsweise zeitliche Entfernung des Kraftfahrzeugs zu der Referenzposition ist relativ groß, so ist es möglich, dass eine weitere Erhöhung der Fahrzeuggeschwindigkeit nicht erlaubt oder nicht erwünscht ist. In diesem Fall soll kein Hinweis an den Fahrer zur weiteren Beschleunigung des Kraftfahrzeugs gegeben werden, weshalb das Verfahren ab Schritt S1 wiederholt wird. Ergänzend ist es möglich, bei hohen Ist-Fahrgeschwindigkeiten auch Hinweise zu einer Geschwindigkeitsreduzierung zu geben.

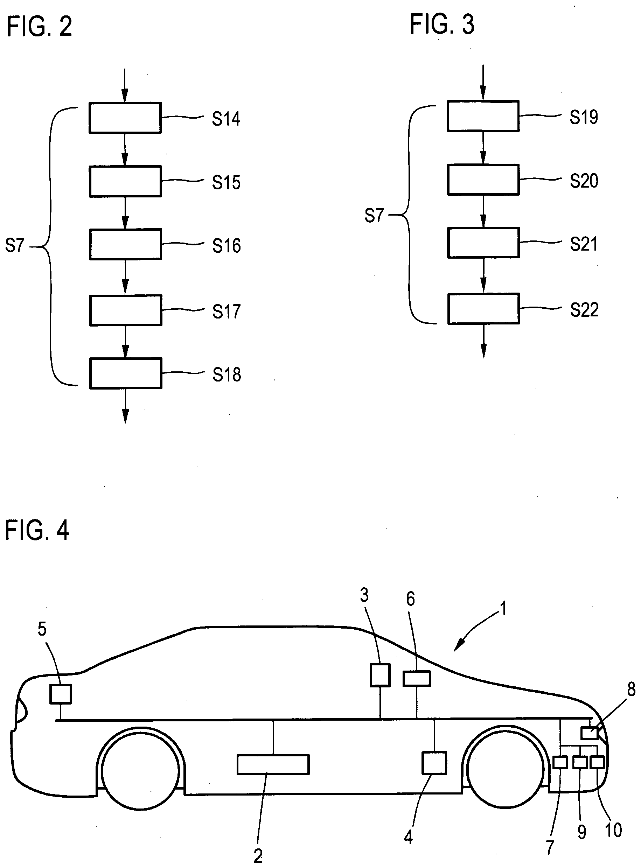

In Schritt S8 wird eine Sollbeschleunigung für das Kraftfahrzeug ermittelt. Die Ermittlung der Sollbeschleunigung erfolgt in Abhängigkeit der Referenzgeschwindigkeit und der momentanen Ist-Fahrgeschwindigkeit des Kraftfahrzeugs, die durch kraftfahrzeugseitige Sensoren erfasst wird. Insbesondere werden das an der Referenzposition vorgegebene Geschwindigkeitsgebot und/oder der Abstand zur Referenzposition ebenfalls berücksichtigt. Möglichkeiten zur Ermittlung der Sollbeschleunigung werden später detailliert mit Bezug auf Fig. 2 und Fig. 3 erläutert.

Ein Fahrer soll angeleitet werden, das Kraftfahrzeug nach Möglichkeit gemäß der Sollbeschleunigung zu führen, um ein zeiteffizientes Fahren zu erreichen. Um den Fahrer bei dem Fahren mit Sollbeschleunigung zu unterstützen werden in den Schritten S9 bis S13 mehrere Hinweis- und Steuerfunktionen des Kraftfahrzeugs genutzt.

In Schritt S9 wird, falls durch Umfeldsensoren des Kraftfahrzeugs ein Fahren hinter einem weiteren Fahrzeug erkannt wird, ausgewertet, ob ein Überholen dieses Fahrzeugs sicher möglich und zweckmäßig ist, um die Sollbeschleunigung zu erreichen. Hierzu werden ein Abstand zu dem vorausfahrenden Fahrzeug, eine Relativgeschwindigkeit, die Beschleunigung des weiteren Fahrzeugs, die Belegung einer Neben- beziehungsweise einer Gegenspur und der Straßenverlauf ausgewertet. Insbesondere wird bei der Prognose eines möglichen Überholvorgangs die Sollbeschleunigung als Ist-Beschleunigung des Kraftfahrzeugs berücksichtigt. Im erfindungsgemäßen Verfahren kann eine Sollbeschleunigung zum Erreichen einer höheren Referenzgeschwindigkeit bereits bei der Auswertung der Überholmöglichkeiten und somit bei der Gabe des Überholhinweises berücksichtigt werden.

Da bekannt ist, dass das Kraftfahrzeug beschleunigt werden soll, ist es möglich, diverse Fahrzeugsysteme an eine zukünftige Beschleunigung anzupassen. Daher wird in Schritt S10 in Abhängigkeit der momentanen Ist-Fahrgeschwindigkeit des Kraftfahrzeugs und der Referenzgeschwindigkeit ein einzulegender Gang des Getriebes des Kraftfahrzeugs bestimmt und ein automatisches Getriebe zum Einlegen des einzulegenden Gangs angesteuert. Der einzulegende Gang wird insbesondere so gewählt, dass eine maximale Beschleunigung oder zumindest die Sollbeschleunigung durch das Kraftfahrzeug erreicht werden kann. Insbesondere wird ein niedrigerer Gang eingelegt. Schritt S10 entspricht somit einem vorweggenommenen Kickdown, das heißt es wird nicht gewartet, bis der Fahrer tatsächlich durch Durchdrücken des Gaspedals eine hohe Beschleunigung anfordert, sondern es wird bereits bei einer erwarteten hohen Beschleunigungsanforderung heruntergeschaltet. In alternativen Ausführungsformen des Verfahrens zur Nutzung in Kraftfahrzeugen ohne automatisches Getriebe ist es auch möglich, dem Fahrer einen Schalthinweis, beispielsweise in Form eines Schaltblitzes, anzuzeigen, um ihn zum Schalten anzuleiten.

Schritt S11 wird in Abhängigkeit der Ist-Fahrgeschwindigkeit und der Referenzgeschwindigkeit ein Soll-Ladedruck für einen Turbo-Lader bestimmt und der Ladedruck des Turbo-Laders auf den Soll-Ladedruck erhöht. Insbesondere wird der Soll-Ladedruck in Abhängigkeit der Sollbeschleunigung bestimmt. Ähnlich wie bereits in Schritt S10 wird eine zukünftige Leistungsanforderung durch den Fahrer prognostiziert und das Kraftfahrzeug auf diese vorbereitet.

In Schritt S12 wird in Abhängigkeit der Soll-Beschleunigung eine Sollfahrpedalstellung ermittelt, bei der in Abhängigkeit weiterer ermittelter Kraftfahrzeug- und/oder Umfeldparameter die Sollbeschleunigung voraussichtlich erreicht wird. In Abhängigkeit dieser Sollfahrpedalstellung wird ein steuerbarer Druckpunkt eines Fahrpedals des Kraftfahrzeugs angepasst. Ein Druckpunkt ist hierbei ein Punkt, an den sich ein Betätigungsdruck zum Verstellen des Fahrpedals ändert. Ein verlagerbarer Druckpunkt kann beispielsweise durch eine zusätzliche verstellbare Dämpfung oder Federung vorgesehen werden. Entsprechend der ermittelten Sollfahrpedalstellung wird ein Aktor angesteuert, der den zusätzlichen Druckpunkt des Fahrpedals verschiebt. Somit wird ein besonders intuitiv erfassbarer Hinweis für den Fahrer gegeben, dass er das Fahrpedal in die Sollfahrpedalstellung verbringen soll.

In Schritt S13 wird zusätzlich ein optischer Hinweis an den Fahrer ausgegeben, der die Sollbeschleunigung darstellt. Die Anzeige erfolgt an einem Multifunktionsdisplay als Kammscher Kreis, der sowohl die momentane Längs- und Querbeschleunigung als auch die Längs- und Querbeschleunigung bei einer Beschleunigung gemäß der Sollbeschleunigung darstellt. In alternativen Ausführungsbeispielen wäre eine Anzeige auch in einem Head-up-Display, einem hinter dem Lenkrad angeordneten Kombi-Display oder durch eine Datenbrille möglich. Auch die Art der Darstellung könne variiert werden. Beispielsweise könnte eine Sollpedalstellung grafisch dargestellt werden, und es könnten Balken, Zeiger oder ähnliches genutzt werden, um eine Ist-Beschleunigung und/oder eine Sollbeschleunigung darzustellen.

Fig. 2 zeigt eine Möglichkeit zur Berechnung der Sollbeschleunigung in Schritt S8. Im Schritt S14 wird zunächst aus einem Datenspeicher des Kraftfahrzeugs eine benutzerseitige Einstellung ausgelesen, inwieweit ein Energieverbrauch des Kraftfahrzeugs während der Ermittlung der Sollbeschleunigung berücksichtigt werden soll. Eine entsprechende Benutzereingabe erfolgt insbesondere über ein menübasiertes Eingabesystem, in dem, insbesondere kontinuierlich oder mehrstufig, zwischen einem besonders energieeffizienten und einem besonders zeiteffizienten Fahren gewählt werden kann.

In Schritt S15 wird eine Beschleunigungsposition bestimmt, die eine Position des prognostizierten Streckenabschnitts beschreibt, ab der das Kraftfahrzeug beschleunigt werden soll, um die höhere Maximalgeschwindigkeit zu erreichen. In Abhängigkeit der jeweiligen Gesetzgebung in einem Land kann es möglich sein, bereits vor der Referenzposition das Kraftfahrzeug auf einen Wert zwischen der vorangehend vorgegebenen Maximalgeschwindigkeit und der höheren Maximalgeschwindigkeit zu beschleunigen. Entsprechende Regelungen können zusätzlich von einem Straßentyp oder ähnliches abhängigen. Insbesondere kann eine Kombination von Kartendaten eines Navigationssystems und einer Referenzdatenbank genutzt werden, um zu bestimmen, ab welcher Position bezüglich der Referenzposition eine Beschleunigung auf Geschwindigkeiten jenseits der vor der Referenzposition vorgegebenen Maximalgeschwindigkeit erfolgen soll. Zugleich wird in Schritt S15 bestimmt, bezüglich welcher Position beziehungsweise welcher Positionen des prognostizierten Streckenabschnitts eine Geschwindigkeit maximiert werden soll.

In Schritt S16 werden mehrere Beschleunigungsprofile von der Ist-Position des Kraftfahrzeugs zu der Referenzposition oder einer hinter der Referenzposition liegenden Position bestimmt und es wird wenigstens eine Geschwindigkeit für wenigstens eine Position für das jeweilige Beschleunigungsprofil ermittelt. Wurde in Schritt S15 ermittelt, dass eine Beschleunigung vor der Referenzposition möglich ist, so wird die Referenzposition als die Position oder eine der Positionen gewählt. Ist hingegen erst eine Beschleunigung ab der Referenzposition möglich, so wird in Abhängigkeit der höheren Maximalgeschwindigkeit und des Straßentyps eine Position jenseits der Referenzposition bestimmt, an der die Geschwindigkeit ausgewertet wird. Die Geschwindigkeitsprofile werden derart bestimmt, dass die höhere Maximalgeschwindigkeit beziehungsweise eine aus der höheren Maximalgeschwindigkeit abgeleitete Geschwindigkeit nicht überschritten wird. Zudem werden nur Sollbeschleunigungen berücksichtigt, die durch das Kraftfahrzeug tatsächlich erreichbar sind.

In Schritt S17 wird für jedes der in Schritt S16 ermittelten Beschleunigungsprofile jeweils ein prognostizierter Verbrauch berechnet. Neben der Beschleunigung werden dabei Eigenschaften des prognostizieren Streckenabschnitts, insbesondere Steigungen und Gefälle, berücksichtigt.

In Schritt S18 wird für jedes der Beschleunigungsprofile eine gewichtete Summe aus der erreichten Geschwindigkeit und dem Verbrauch berechnet. Der Verbrauch wird dabei negativ bewertet. Die Gewichtungsfaktoren werden in Abhängigkeit der in Schritt S14 ausgelesenen Benutzereinstellung bezüglich einer Abwägung zwischen Verbrauchseffizienz und Zeiteffizienz bestimmt. Als das Beschleunigungsprofil, aus dem die Sollbeschleunigung bestimmt wird, wird jenes Beschleunigungsprofil gewählt, für das die gewichtete Summe maximal ist.

In alternativen Ausführungsformen ist es möglich, Geschwindigkeiten an mehreren Positionen zu berücksichtigen. Diese können separat in die gewichtete Summe eingehen. Alternativ ist es zudem möglich, das Beschleunigungsprofil zur Bestimmung der Sollbeschleunigung durch Variation des Beschleunigungsprofils zur Maximierung der gewichteten Summe zu bestimmen.

Die zur Fig. 2 beschriebene Bestimmung der Sollbeschleunigung maximiert eine lokale Zeiteffizienz, das heißt das Kraftfahrzeug soll möglichst schnell zu einem relativ nahen Punkt bewegt werden. Häufig ist jedoch gewünscht, eine globale Zeiteffizienz für eine gesamte Fahrt des Kraftfahrzeugs zu optimieren, das heißt eine Gesamtzeit, die für eine Fahrt zu einem vorgegebenen Ziel benötigt wird, zu minimieren. Insbesondere, wenn der Füllstand eines Tanks oder der Ladezustand einer Batterie, die zum Fahrbetrieb genutzt wird, niedrig ist, kann es möglich sein, dass eine Erhöhung des Verbrauchs aufgrund von starken Beschleunigungen dazu führt, dass zusätzliche Tankbeziehungsweise Ladestopps notwendig sind. In diesem Fall kann es möglich sein, dass eine Wahl einer geringeren Sollbeschleunigung zu einer insgesamt verringerten Fahrzeit führt.

Eine Ermittlung einer Sollbeschleunigung, die dies berücksichtigt, ist in Fig. 3 gezeigt. Im Schritt S19 wird zunächst ein Füllstand eines Tanks beziehungsweise ein Ladezustand einer Batterie durch kraftfahrzeugseitige Sensoren bestimmt. In Schritt S20 werden wie zu Schritt S16 erläutert mehrere Beschleunigungsszenarien für das Kraftfahrzeug ermittelt. Anschließend wird in Schritt S21 für jedes dieser Beschleunigungsszenarien eine Zeit bis zum Erreichen eines Fahrziels bestimmt. Das Fahrziel kann durch einen Fahrer in einem Navigationssystem programmiert sein oder durch das Navigationssystem selbstständig ermittelt sein. Im Rahmen der Berechnung der Fahrzeit wird auch ein Verbrauchsprofil des Kraftfahrzeugs berechnet und es werden Tank- beziehungsweise Ladestopps für das Kraftfahrzeug an im Navigationssystem gespeicherten Tankstellen beziehungsweise Ladestationen geplant. Die prognostizierte Zeit berücksichtigt die zusätzlichen Zeiten, die zum Tanken beziehungsweise Laden des Kraftfahrzeugs erforderlich sind

In Schritt S22 wird anschließend das Beschleunigungsszenario ausgewählt, dessen Zeit zum Erreichen des Ziels am geringsten ist und es wird eine dem Beschleunigungsszenario entsprechende Sollbeschleunigung für die folgenden Schritte bereitgestellt.

In einer alternativen Ausführungsform können in den einzelnen Beschleunigungsszenarien nur einzelne Parameter, beispielsweise eine maximal erreichte Drehzahl des Kraftfahrzeugs oder ein maximaler Ladedruck eines Turbo-Laders variiert werden, die besonders starken Einfluss auf einen Verbrauch des Kraftfahrzeugs haben. In einer weiteren alternativen Ausführungsform können zusätzliche Randbedingungen berücksichtigt werden. Beispielsweise kann in einem Hybridfahrzeug als zusätzliche Randbedingung berücksichtigt werden, dass das Ziel durch ein rein elektrisches Fahren erreicht wird.

Fig. 4 zeigt ein Kraftfahrzeug, das zur Ausführung des in Fig. 1 dargestellten Verfahrens ausgebildet ist. Das Kraftfahrzeug 1 umfasst eine Steuereinrichtung 2, die zur Gabe eines Hinweises an den Fahrer des Kraftfahrzeugs betreffend eine Sollbeschleunigung dient. Hierzu ist das Display 3 zur Gabe eines optischen Hinweises ansteuerbar und ein einem Fahrpedal zugeordneter Aktor 4 ist ansteuerbar, um einen Druckpunkt des Fahrpedals durch Verschieben eines zusätzlichen Federelements zu verschieben. Die Ermittlung der Sollbeschleunigung erfolgt wie zu den Figuren 1 bis 3 erläutert. Hierzu erfasst die Steuereinrichtung 2 eine Ist-Position des Kraftfahrzeugs durch Auswertung der Daten einer Satellitennavigationseinrichtung 5, beispielsweise eines GPS-Empfängers. Anhand der Ist-Position und von Kartendaten sowie einer Zielvorgabe eines Navigationssystems 6 wird ein prognostizierter Streckenabschnitt bestimmt. Durch den Geschwindigkeitssensor 7 wird zudem eine Ist-Fahrgeschwindigkeit des Kraftfahrzeugs ermittelt. Wie vorangehend erläutert, bestimmt die Steuereinrichtung 2 aus diesen Daten eine Sollbeschleunigung und steuert das Display 3 und den Aktor 4 entsprechend an.

Ergänzend wertet die Steuereinrichtung 2 Bilder einer Kamera 8 aus um zu ermitteln, ob sich vor dem Kraftfahrzeug ein Fahrzeug befindet und um ergänzend zu den Kartendaten des Navigationssystems 6 Markierungen beziehungsweise Schilder zu erkennen, die Geschwindigkeitsgebote vorgeben.

Die Steuereinrichtung 2 steuert zudem in Abhängigkeit einer ermittelten Sollbeschleunigung ein automatisches Getriebe 9 an, um einen der Sollbeschleunigung optimal entsprechenden Sollgang einzulegen. Zudem steuert sie eine Motorsteuerung 10 um den Ladedruck eines Turbo-Laders anzupassen.

## Patentansprüche

1. Verfahren zur Fahrerinformation in einem Kraftfahrzeug, umfassend die folgenden Schritte:
- Ermitteln eines voraussichtlich zukünftig durch das Kraftfahrzeug befahrenen, prognostizierten Streckenabschnitts,
- Ermitteln einer Referenzgeschwindigkeit in Abhängigkeit wenigstens einer durch ein Geschwindigkeitsgebot in dem prognostizierten Streckenabschnitt oder in einem Teilabschnitt des prognostizierten Streckenabschnitts vorgegebenen Maximalgeschwindigkeit,
- Erfassen einer momentanen Ist-Fahrgeschwindigkeit des Kraftfahrzeugs, und
- Gabe eines Sollbeschleunigungshinweises zum Hinweis des Fahrers des Kraftfahrzeugs auf eine mögliche Beschleunigung des Kraftfahrzeugs, falls die Referenzgeschwindigkeit zumindest um einen vorgegebenen Differenzwert größer als die momentane Ist-Fahrgeschwindigkeit ist;
wobei wenigstens eine Referenzposition ermittelt wird, an der sich die vorgegebene Maximalgeschwindigkeit in dem prognostizierten Streckenabschnitt und/oder in einem zeitlich vorangehend durch das Kraftfahrzeug befahrenen Streckenabschnitt ändert, wobei die Referenzgeschwindigkeit zusätzlich in Abhängigkeit einer auf einen Streckenverlauf des prognostizierten und/oder des vorangehend befahrenen Streckenabschnitts bezogenen, räumlichen und/oder zeitlichen Entfernung des Kraftfahrzeugs von der Referenzposition ermittelt wird.

2. Verfahren nach Anspruch 1,
**dadurch gekennzeichnet,**
**dass** zur Bestimmung des prognostizierten Streckenabschnitts ein Navigationssystem des Kraftfahrzeugs verwendet wird.

3. Verfahren nach Anspruch 1 oder 2,
**dadurch gekennzeichnet,**
**dass** die Referenzgeschwindigkeit in Abhängigkeit eines geometrischen Verlaufs des prognostizierten Streckenabschnitts und/oder einer wenigstens eine fahrdynamikrelevante Eigenschaft einer Fahrbahn im prognostizierten Streckenabschnitt beschreibenden Fahrbahneigenschaft ermittelt wird.

4. Verfahren nach einem der vorangehenden Ansprüche,
**dadurch gekennzeichnet,**
**dass** als die Referenzposition eine Referenzposition im prognostizierten Streckenabschnitt bestimmt wird, an der sich die vorgegebene Maximalgeschwindigkeit erhöht.

5. Verfahren nach einem der vorangehenden Ansprüche,
**dadurch gekennzeichnet,**
**dass** zu der Ermittlung der Referenzposition Kartendaten verwendet werden, die Geschwindigkeitsgebote für mehrere Streckenabschnitte beschreiben.

6. Verfahren nach einem der vorangehenden Ansprüche,
**dadurch gekennzeichnet,**
**dass** in Abhängigkeit der momentanen Ist-Fahrgeschwindigkeit und der Referenzgeschwindigkeit eine Sollbeschleunigung berechnet wird, wobei der Sollbeschleunigungshinweis die Sollbeschleunigung beschreibt.

7. Verfahren nach Anspruch 6,
**dadurch gekennzeichnet,**
**dass** die Schritte der Ermittlung der Sollbeschleunigung und der Gabe des Hinweises mehrfach derart wiederholt werden, dass das Kraftfahrzeug bei einem Befolgen der Hinweise durch den Fahrer auf eine von der vorgegebenen Maximalgeschwindigkeit an der Referenzposition abhängige Soll-Fahrgeschwindigkeit beschleunigt wird.

8. Verfahren nach Anspruch 6 oder 7,
**dadurch gekennzeichnet,**
**dass** die Sollbeschleunigung derart ermittelt wird, dass eine Fahrgeschwindigkeit an wenigstens einer vorgegebenen Position in dem prognostizierten Streckenabschnitt unter Berücksichtigung wenigstens einer einen Fahrbetrieb des Kraftfahrzeugs und/oder einen Kraftfahrzeugzustand betreffenden Randbedingung maximal ist.

9. Verfahren nach Anspruch 6 oder 7,
**dadurch gekennzeichnet,**
**dass** die Sollbeschleunigung derart ermittelt wird, dass eine prognostizierte Fahrzeit zu einem vorgegebenen Fahrziel unter wenigstens einer einen Fahrbetrieb des Kraftfahrzeugs und/oder einen Kraftfahrzeugzustand betreffenden vorgegebenen Randbedingung minimal ist.

10. Verfahren nach Anspruch 8 oder 9,
**dadurch gekennzeichnet,**
**dass** als die Randbedingung oder eine der Randbedingungen ein Füllstand eines Treibstofftanks und/oder ein Ladezustand eines Energiespeichers berücksichtigt wird.

11. Verfahren nach einem der Ansprüche 6 bis 10,
**dadurch gekennzeichnet,**
**dass** aus der Sollbeschleunigung eine Sollfahrpedalstellung ermittelt wird, wonach als Hinweis eine die Sollfahrpedalstellung betreffende Information ausgegeben wird.

12. Verfahren nach Anspruch 11,
**dadurch gekennzeichnet, dass** ein Fahrpedal mit einer vorgebbaren Position eines Druckpunkts genutzt wird, wobei als Hinweis die Sollfahrpedalstellung als Position des Druckpunkts vorgegeben wird.

13. Verfahren nach einem der Ansprüche 6 bis 12,
**dadurch gekennzeichnet,**
**dass** eine Bedieneingaben zur Anpassung der Art der Bestimmung der Sollbeschleunigung erfasst wird, wonach angepasst wird, inwieweit ein Energieverbrauch des Kraftfahrzeugs während der Ermittlung der Sollbeschleunigung berücksichtigt wird.

14. Verfahren nach einem der vorangehenden Ansprüche, **dadurch gekennzeichnet, dass** ein von der Referenzgeschwindigkeit und der momentanen Ist-Fahrgeschwindigkeit des Kraftfahrzeugs abhängender einzulegender Gang eines Getriebes des Kraftfahrzeugs bestimmt wird, wonach ein den einzulegenden Gang betreffender Sollganghinweis an den Fahrer ausgegeben wird oder ein automatisches Getriebe zum Einlegen des einzulegenden Gangs angesteuert wird.

15. Verfahren nach einem der vorangehenden Ansprüche,
**dadurch gekennzeichnet,**
**dass** ein Ladedruck eines Turbo-Laders in Abhängigkeit der Referenzgeschwindigkeit und der momentanen Ist-Fahrgeschwindigkeit des Kraftfahrzeugs angepasst wird.

16. Verfahren nach einem der vorangehenden Ansprüche,
**dadurch gekennzeichnet,**
**dass** bei Erfassung eines vor dem Kraftfahrzeug fahrenden weiteren Fahrzeugs in Abhängigkeit einer erfassten Belegung weiterer Spuren einer befahrenen Straße und/oder eines geometrischen Verlaufs des prognostizierten Streckenabschnitts ein ein Überhohlen des weiteren Fahrzeugs betreffender Überhohlhinweis gegeben wird.

17. Kraftfahrzeug,
**dadurch gekennzeichnet,**
**dass** es zur Durchführung eines Verfahrens nach einem der vorangehenden Ansprüche ausgebildet ist.

## Claims

1. Method for driver information in a motor vehicle, comprising the following steps:
- determination of an expected projected future route section to be driven by the motor vehicle,
- determination of a reference speed depending on at least one maximum speed predetermined by a speed requirement in the projected route section or in a partial section of the projected route section,
- detection of an instantaneous actual driving speed of the motor vehicle, and
- offering of a target acceleration suggestion as a suggestion to the driver of the motor vehicle on a possible acceleration of the motor vehicle, in the event that the reference speed is greater than the instantaneous actual speed by at least a predetermined differential value;
wherein at least one reference position is determined, at which the predetermined maximum speed in the projected route section and/or in a route section driven beforehand by the motor vehicle changes, wherein the reference speed is determined additionally depending on a spatial and/or temporal distance of the motor vehicle from the reference position in relation to a course of the projected and/or previously driven route section.

2. Method according to claim 1, **characterised in that** a navigation system of the motor vehicle is used to designate the projected route section.

3. Method according to claim 1 or 2, **characterised in that** the reference speed is determined depending on a geometric course of the projected route section and/or a carriageway property describing at least one vehicle dynamic-related property of a carriageway in the projected route section.

4. Method according to any of the preceding claims, **characterised in that** a reference position in the projected route section at which the predetermined maximum speed increases is designated as the reference position.

5. Method according to any of the preceding claims, **characterised in that** card data that describe speed requirements for a plurality of route sections are used to determine the reference position.

6. Method according to any of the preceding claims, **characterised in that** a target acceleration is calculated depending on the instantaneous actual driving speed and the reference speed, wherein the target acceleration suggestion describes the target acceleration.

7. Method according to claim 6, **characterised in that** the steps to determine the target acceleration and the offering of the suggestion are repeated multiple times, such that, if the suggestions are heeded by the driver, the motor vehicle is accelerated to a target driving speed dependent on the predetermined maximum speed at the reference position.

8. Method according to claim 6 or 7, **characterised in that** the target acceleration is determined, such that a driving speed is maximal at at least one predetermined position in the projected route section, taking into account at least one boundary condition relating to a road load of the vehicle and/or a motor-vehicle state.

9. Method according to claim 6 or 7, **characterised in that** the target acceleration is determined, such that a projected travel time to a predetermined travel destination is minimal under at least one predetermined boundary condition relating to a road load of the vehicle and/or a motor-vehicle state.

10. Method according to claim 8 or 9, **characterised in that** a fill level of a fuel tank and/or a state of charge of an energy store is taken into account as the boundary condition or one of the boundary conditions.

11. Method according to any one of claims 6 to 10, **characterised in that** a target position of the accelerator pedal is determined from the target acceleration, according to which information relating to the target position of the accelerator pedal is issued as suggestion.

12. Method according to claim 11, **characterised in that** an accelerator pedal with a predeterminable position of a pressure point is used, wherein the target position of the accelerator pedal as position of the pressure point is predetermined as suggestion.

13. Method according to any of claims 6 to 12, **characterised in that** an operating input to adjust the nature of the designation of the target acceleration is detected, according to which the extent to which an energy consumption of the vehicle during the determination of the target acceleration is taken into account is adjusted.

14. Method according to any of the preceding claims, **characterised in that** a gear of a gearbox of the motor vehicle to be engaged, depending on the reference speed and the instantaneous actual driving speed of the motor vehicle, is designated, according to which a target gear suggestion relating to the gear to be engaged is issued to the driver or an automatic gearbox is controlled to engage the gear to be engaged.

15. Method according to any of the preceding claims, **characterised in that** a charge pressure of a turbocharger is adjusted depending on the reference speed and the instantaneous actual driving speed of the motor vehicle.

16. Method according to any of the preceding claims, **characterised in that**, if a further vehicle travelling in front of the motor vehicle is detected, an overtaking suggestion relating to overtaking of the further vehicle is given, depending on a detected occupancy of further lanes of a driven road and/or a geometric course of the projected route section.

17. Motor vehicle, **characterised in that** it is configured to perform a method according to any of the preceding claims.

## Revendications

1. Procédé destiné à l'information du conducteur dans un véhicule automobile, comprenant les étapes suivantes :
- déterminer un tronçon de route pronostiqué que le véhicule automobile va probablement parcourir,
- déterminer une vitesse de référence en fonction d'au moins une vitesse maximale prédéterminée par une règle de vitesse dans le tronçon de route pronostiqué ou dans un sous-tronçon du tronçon de route pronostiqué,
- détecter une vitesse réelle momentanée du véhicule automobile, et
- donner une indication d'accélération de consigne afin d'indiquer au conducteur du véhicule automobile une accélération possible du véhicule automobile si la vitesse de référence est supérieure d'au moins une valeur de différence prédéterminée à la vitesse réelle momentanée ;
dans lequel on détermine au moins une position de référence au niveau de laquelle la vitesse maximale prédéterminée varie dans le tronçon de route pronostiqué et/ou dans un tronçon de route préalablement parcouru par le véhicule automobile,
dans lequel on détermine en plus la vitesse de référence en fonction d'un écart spatial et/ou temporel entre le véhicule automobile et la position de référence par rapport à une allure de route du tronçon de route pronostiqué et/ou du tronçon de route préalablement parcouru.

2. Procédé selon la revendication 1, **caractérisé en ce que**, pour déterminer le tronçon de route pronostiqué, on utilise un système de navigation du véhicule automobile.

3. Procédé selon la revendication 1 ou 2, **caractérisé en ce qu'**on détermine la vitesse de référence en fonction d'une allure géométrique du tronçon de route pronostiqué et/ou d'une propriété de voie de circulation décrivant au moins une propriété, relevant de la dynamique de conduite, d'une voie de circulation dans le tronçon de route pronostiqué.

4. Procédé selon l'une quelconque des revendications précédentes, **caractérisé en ce qu'**on détermine comme position de référence une position de référence dans le tronçon de route pronostiqué au niveau de laquelle la vitesse maximale prédéterminée augmente.

5. Procédé selon l'une quelconque des revendications précédentes, **caractérisé en ce que**, pour déterminer la position de référence, on utilise des données cartographiques qui décrivent les règles de vitesse pour plusieurs tronçons de route.

6. Procédé selon l'une quelconque des revendications précédentes, **caractérisé en ce que**, en fonction de la vitesse réelle momentanée et de la vitesse de référence, on calcule une accélération de consigne, l'indication d'accélération de consigne décrivant alors l'accélération de consigne.

7. Procédé selon la revendication 6, **caractérisé en ce qu'**on répète plusieurs fois les étapes de la détermination de l'accélération de consigne et de la donnée de l'indication de telle sorte que le véhicule automobile, lorsque les indications sont suivies par le conducteur, est accéléré à une vitesse de consigne qui dépend de la vitesse maximale prédéterminée au niveau de la position de référence.

8. Procédé selon la revendication 6 ou 7, **caractérisé en ce qu'**on détermine l'accélération de consigne de telle sorte qu'une vitesse au niveau d'au moins une position prédéterminée dans le tronçon de route pronostiqué en tenant compte d'au moins une condition aux limites qui concerne un fonctionnement de conduite du véhicule automobile et/ou un état de véhicule automobile est maximale.

9. Procédé selon la revendication 6 ou 7, **caractérisé en ce qu'**on détermine l'accélération de consigne de telle sorte qu'un temps de conduite pronostiqué jusqu'à une destination prédéterminée dans au moins une condition aux limites prédéterminée qui concerne un fonctionnement de conduite du véhicule automobile et/ou un état de véhicule automobile est minimal.

10. Procédé selon la revendication 8 ou 9, **caractérisé en ce que**, comme condition aux limites ou comme une des conditions aux limites, on prend en compte un niveau de remplissage d'un réservoir de carburant et/ou un état de charge d'une batterie.

11. Procédé selon l'une des revendications 6 à 10, **caractérisé en ce qu'**on détermine à partir de l'accélération de consigne une position de pédale de consigne et on délivre à partir de là comme indication une information qui concerne la position de pédale de consigne.

12. Procédé selon la revendication 11, **caractérisé en ce qu'**on utilise une pédale avec une position pouvant être prescrite d'un point de pression et on prédétermine comme indication la position de pédale de consigne en tant que position du point de pression.

13. Procédé selon l'une quelconque des revendications 6 à 12, **caractérisé en ce qu'**on détecte une entrée de commande en vue de l'adaptation du type de la détermination de l'accélération de consigne et on adapte à partir de là la manière dont une consommation d'énergie du véhicule automobile est prise en compte pendant la détermination de l'accélération de consigne.

14. Procédé selon l'une quelconque des revendications précédentes, **caractérisé en ce qu'**on détermine un rapport à passer d'une boîte de vitesses du véhicule automobile, rapport dépendant de la vitesse de référence et de la vitesse réelle momentanée du véhicule automobile, et on délivre à partir de là au conducteur une indication de rapport de consigne qui concerne le rapport à passer ou on commande à partir de là une boîte de vitesses automatique dans le but de passer le rapport à passer.

15. Procédé selon l'une quelconque des revendications précédentes, **caractérisé en ce qu'**on adapte une pression de charge d'un turbocompresseur à suralimentation en fonction de la vitesse de référence et de la vitesse réelle momentanée du véhicule automobile.

16. Procédé selon l'une quelconque des revendications précédentes, **caractérisé en ce que**, lors de la détection d'un autre véhicule automobile roulant devant le véhicule automobile, on donne une indication de dépassement qui concerne un dépassement de l'autre véhicule en fonction d'une occupation détectée d'autres voies d'une route parcourue et/ou d'une allure géométrique du tronçon de route pronostiqué.

17. Véhicule automobile, **caractérisé en ce qu'**il est réalisé pour la mise en oeuvre d'un procédé selon l'une quelconque des revendications précédentes.
